# EUROPEAN PATENT APPLICATION

(11) **EP 1 437 275 A1**
(43) Date of publication of application: **14.07.2004**
(21) Application number: 03100023.5
(22) Date of filing: 09.01.2003
(51) Int. Cl.: B60T 7/04, B60T 7/22

(54) **An improved braking apparatus for a motor vehicle**

(71) Applicant: Ford Global Technologies, Inc., Dearborn, Michigan 48126 (US)
(72) Inventor: Tarabishy, M., Nabeel, Walled Lake, MI 48390 (US); Engelman, Gerald, H., Plymouth, MI 48170 (US); Lind, Henrik, 423 39 Torslanda (SE); Modigsson, Alexander, 422 57 Gunnilse (SE)
(74) Representative: Messulam, Alec Moses

(57) **Abstract**

A braking apparatus (23) includes a brake pedal (28) connected to a brake pedal actuator (33) for applying a variable brake feel force to the brake pedal (28), a forward detection apparatus (20) to detect the relative distance and speed to a target vehicle and a controller (24) to monitor the relative distance and speed to notify the driver to slow down.

Upon application of a force to the brake pedal (28) the brake feel force is reduced by the brake pedal actuator (33) in proportion to the level of threat detected. In this way, the driver is induced to apply an increased brake pedal force.

## Description

The present invention relates generally to brake systems for automotive vehicles, and more particularly, to a brake pedal assist system.

Automotive brake systems are the result of a long evolutionary process and are one of the most important systems in a vehicle. Typical brake systems include a master cylinder, located under the hood, which is directly connected to a brake pedal. The master cylinder converts mechanical pressure applied to the brake pedal into a proportional amount of hydraulic pressure. This hydraulic pressure is used to actuate the vehicle brakes. Many brake systems also use the engine's energy to add pressure to the master cylinder.

Recent vehicle data indicates that drivers do not utilize the brake system effectively. When the brake system is used, it is often applied too late. To improve upon driver performance, various warning systems for notifying the driver to apply the brakes have been suggested in the prior art. U.S. Patent No. 5,410,304 discloses a method and apparatus for displaying the impending danger due to speed associated with the driving situation of a vehicle. The apparatus uses a visual display to warn a driver as to the degree of imminent danger/risk.

U.S. Patent No. 6,243,024 discloses a device for monitoring the surroundings of a vehicle. Operating and control circuits activate light emitting diodes depending on a degree of risk. The 6,243,024 patent detects objects using radar and determines the possibility of collisions with these objects. This is displayed to the driver using a visible warning to convey a degree of risk and/or safety.

U.S. Patent No. 5,777,563 discloses a method and assembly for object detection by a vehicle. The assembly calculates and provides an audible warning and a visible indicator signal to the driver based on the degree of closeness of a target vehicle.

U.S. Patent No. 5,781,103 discloses a vehicle cruise control system. This apparatus calculates the magnitude of necessary braking and 'indicates' to the driver when the apparatus is employing the maximum braking force allowed by the system. The indication to the driver may be audible, visual or by touch.

Unfortunately, the systems suggested by these patents have several disadvantages. The warnings suggested by the prior art are very dependent on driver attentiveness. They will not notify a driver that may be visually and audibly distracted. Additionally, none of the prior art warnings help to assist the driver decelerate the vehicle.

The disadvantages associated with these conventional braking stimulation techniques have made it apparent that a new technique is needed. The new technique should provide adequate notification for braking while enhancing driver performance. The present invention is directed to these ends.

It is an object of the invention to provide an improved braking system for a motor vehicle.

According to a first aspect of the invention there is provided a braking apparatus for a motor vehicle characterised in that the apparatus comprises a brake pedal operative to reduce vehicle speed and coupled to a brake position sensor, the brake position sensor being operative to generate a brake position signal, a brake pedal actuator coupled to the brake pedal and operative to generate a variable brake feel force to the brake pedal, a forward detection apparatus operative to detect vehicle distance and relative vehicle speed and generate a vehicle distance signal and a relative vehicle speed signal and a controller coupled to the brake pedal actuator and operatively arranged to receive the brake position signal, the vehicle distance signal and the vehicle speed signal wherein the controller includes control logic operative to modify the variable brake feel force in proportion to the brake position signal, the vehicle distance signal and the vehicle speed signal.

Advantageously, the variable brake feel force may induce a driver to apply an increased brake pedal force.

The variable brake feel force may be reduced in proportion to the brake position signal, the vehicle distance signal and the vehicle speed signal.

The apparatus may further comprise a visible warning apparatus coupled to and controlled by the controller.

The visible warning apparatus may emit a visible signal having a variable colour and a variable intensity.

The controller may include control logic operative generate the colour and the intensity in proportion to the brake position signal, the vehicle distance signal and the vehicle speed signal.

The apparatus may further comprise an audible warning apparatus coupled to and controlled by the controller.

The audible warning apparatus may emit an audible signal having a variable frequency and a variable volume.

The controller may include control logic operative generate the frequency and the volume in proportion to the brake position signal, the vehicle distance signal and the vehicle speed signal.

The apparatus may further comprises the brake pedal located in the vehicle and operative to reduce vehicle speed, the brake pedal coupled to a brake position sensor, the brake position sensor being operative to generate a brake position signal, the brake pedal actuator located in the vehicle and coupled to the brake pedal, the brake pedal actuator operative to generate a variable brake feel force to the brake pedal, the forward detection apparatus located at the front of the vehicle and operative to detect vehicle distance and relative vehicle speed and generate a vehicle distance signal and a relative vehicle speed signal and the controller located in the vehicle and coupled to the brake pedal actuator, the controller operative to receive the brake position signal, the vehicle distance signal and the vehicle speed signal and including control logic operative to modify the variable brake feel force in proportion to the brake position signal, the vehicle distance signal and the vehicle speed signal.

According to a second aspect of the invention there is provided a motor vehicle having a braking apparatus in accordance with said first aspect of the invention.

According to a third aspect of the invention there is provided a method for providing enhanced braking for a vehicle comprising the steps of monitoring a position of a brake pedal, determining distance and relative speed to a second vehicle and modifying a variable brake feel force of the brake pedal in proportion to the position of the brake pedal, the distance and the relative speed to the second vehicle.

The step of modifying a variable brake feel force of the brake pedal may comprise reducing the variable brake feel force of the brake pedal to induce a driver to apply an increased brake pedal force.

The method may further comprise the step of warning the driver by generating a visible signal having a variable colour and variable intensity proportional to the position of the brake pedal, the distance and relative speed to the second vehicle.

The method may further comprise the step of warning the driver by generating an audible signal having a variable frequency and variable volume proportional to the position of the brake pedal, the distance, and relative speed to the second vehicle.

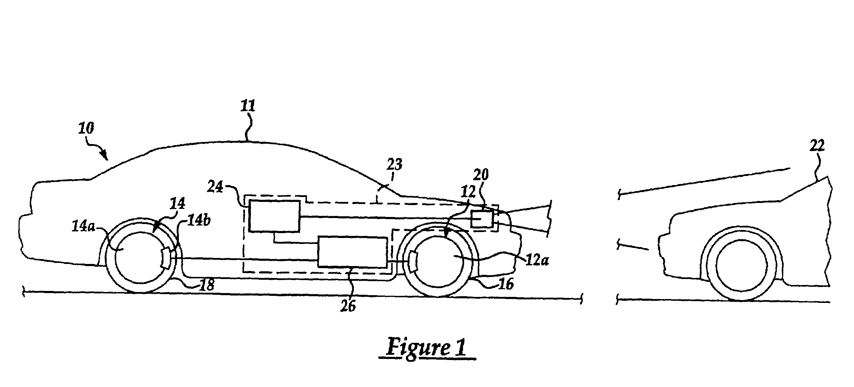

The invention will now be described by way of example with reference to the accompanying drawing of which:-
FIG.1 is a pictorial side view of a motor vehicle having a braking apparatus in accordance with one aspect of the present invention; and
FIG.2 is a braking apparatus in accordance with the present invention.

In the following figures, the same reference numerals will be used to identify identical components in the various views. The present invention is illustrated with respect to a brake system, particularly suited for the automotive field. However, the present invention is applicable to various other uses that may require a brake pedal system.

Referring to the Figures there is shown a braking system 10 having a braking apparatus 23 according to the present invention.

A vehicle 11 is provided with a brake system 26 having brake mechanisms 12 and 14 for front and rear wheels 16 and 18, respectively. As shown the brake mechanisms 12 and 14 comprise disc rotors 12a and 14a rotating with wheels 16 and 18, calipers 12b and 14b for braking the rotation of disc rotors 12a and 14a when hydraulic fluid for braking control is supplied.

The vehicle 11 further comprises a forward detection apparatus 20 for detecting the distance and relative speed between the driving vehicle 10 and the leading vehicle 22 by irradiating laser beams, infrared, radar, microwave or equivalent detection means. Vehicle 11 also includes a braking apparatus 23 having a controller 24 receiving signals from the forward detection apparatus 20.

The intention of the present invention is to mitigate or avoid imminent frontal contact by means of encouraging the driver to apply an increased force to brake pedal 28.

Application of the present invention should occur before the opportunity to steer away from the threat is passed. Preliminary efficiency estimations show that contact may be avoided with appropriate brake application.

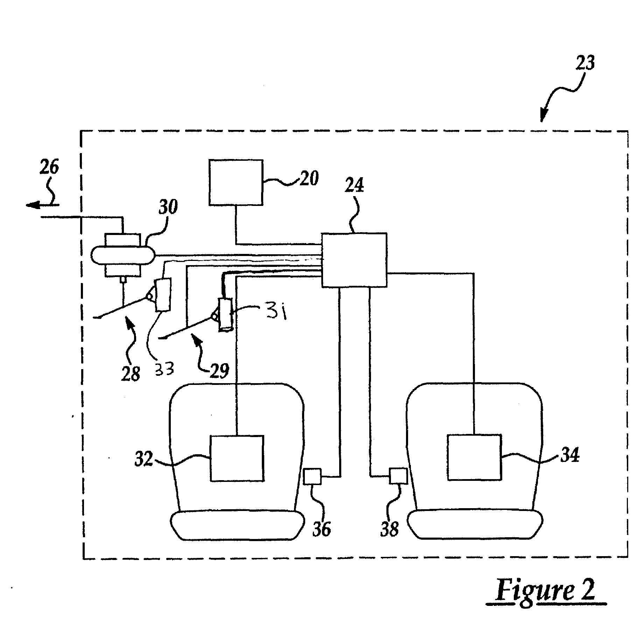

With particular reference to Fig.2 there is shown in greater detail the braking apparatus 23 according to the present invention.

A brake pedal 28 operated by the driver (not shown) exerts a brake pedal force upon a variable brake booster 30 and is coupled to a brake position sensor 50. A brake pedal actuator 33 is coupled to brake pedal 28 and controls the brake feel of brake pedal 28 by applying a brake feel force.

The braking system 26 is coupled to the variable brake booster 30 that produces a variable brake booster force causing the braking system 26 to exert a braking force proportional to the pedal force.

An accelerator pedal 29 controls engine speed and is coupled to an accelerator position sensor. An accelerator actuator 31 is coupled to accelerator pedal 29 and may apply a variable force to accelerator pedal 29 to provide braking stimulation to the driver. The forward detection apparatus 20 detects a relative distance and speed to vehicle 22 and signals controller 24.

Controller 24 notifies the driver to decelerate vehicle 11. In the preferred embodiment, the notification is a physical signal transmitted to the driver through brake pedal 28. One skilled in the art, however, would realize that the notification might be through an audible or visible signal. The level of notification given to the driver is proportional to the distance and the relative speed between vehicle 11 and vehicle 22. In many situations, this would involve slightly reducing the brake feel force to brake pedal 28 for low threat situations and increasing the amount of brake feel reduction as the threat increases.

The reduction in brake feel force does not reduce brake pedal travel significantly or have an adverse effect on braking performance. One advantage of this technique is that any reduction of the brake feel force will encourage the driver to apply an increased amount of force to the brake pedal 28. This system is particularly suited to brake-by-wire applications where brake pedal feel and travel is a function of the brake-by-wire system.

In the preferred embodiment, the level of brake feel reduction is a continuous function of relative speed, relative distance, and target classification.

If an audible warning apparatus 51 is coupled to and controlled by the controller 24 to produce an audible signal to notify the driver then this would produce an audible signal of varying signal frequency and volume based upon the level of the threat. For low threats the audible signal would have a low volume and frequency and for higher threats the audible signal would have an increased volume level and frequency.

The controller 24 would ideally includes control logic operative generate the frequency and said volume in proportion to the brake position signal, the vehicle distance signal and the vehicle speed signal.

If a visible warning apparatus 52 is coupled to and controlled by the controller to produce a visible signal to notify the driver either in combination with an audible signal or as an alternative then this would produce a visible signal that would vary in colour and intensity depending upon the threat. The visible signal would use a muted colour such as green (G) and low intensity for low threat levels and a brighter colour such as red (R) or Yellow (Y)and a higher intensity for increased threat levels.

The controller 24 would ideally include control logic operative generate the colour and intensity in proportion to the brake position signal, the vehicle distance signal and the vehicle speed signal.

It will be appreciated that any of these notification signals may be pulsed at a low frequency for low level threats and at a higher frequency for high level threats.

The method and system of the present invention enhances driver performance during braking situations. Additionally, the present invention improves vehicle deceleration based on a variable threat level.

From the foregoing, it can be seen that there has been brought to the art a new and improved brake system. The present invention thus achieves an improved brake system that is advantageous in that it enhances driver braking performance.

It is to be understood that the preceding description of the preferred embodiment is merely illustrative of some of the many specific embodiments that represent applications of the principles of the present invention and it will be appreciated by those skilled in the art that numerous other embodiments could be constructed without departing from the scope of the invention.

## Claims

1. A braking apparatus (23) for a motor vehicle (11) **characterised in that** the apparatus (23) comprises a brake pedal (28) operative to reduce vehicle speed and coupled to a brake position sensor (50), the brake position sensor (50) being operative to generate a brake position signal, a brake pedal actuator (33) coupled to the brake pedal (28) and operative to generate a variable brake feel force to the brake pedal (28), a forward detection apparatus (20) operative to detect vehicle distance and relative vehicle speed and generate a vehicle distance signal and a relative vehicle speed signal and a controller (24) coupled to the brake pedal actuator (33) and operatively arranged to receive the brake position signal, the vehicle distance signal and the vehicle speed signal wherein the controller (24) includes control logic operative to modify the variable brake feel force in proportion to the brake position signal, the vehicle distance signal and the vehicle speed signal.

2. An apparatus as claimed in claim 1 wherein the variable brake feel force is reduced in proportion to the brake position signal, the vehicle distance signal and the vehicle speed signal.

3. An apparatus as claimed in claim 1 or in claim 2 further comprising a visible warning apparatus (52) coupled to and controlled by the controller (24).

4. An apparatus as claimed in claim 3 wherein the visible warning apparatus emits a visible signal having a variable colour and a variable intensity.

5. An apparatus as claimed in claim 4 wherein the controller (24) includes control logic operative generate the colour and the intensity in proportion to the brake position signal, the vehicle distance signal and the vehicle speed signal.

6. An apparatus as claimed in any of claims 1 to 5 further comprising an audible warning apparatus (51) coupled to and controlled by the controller (24).

7. An apparatus as claimed in claim 6 wherein the audible warning apparatus emits an audible signal having a variable frequency and a variable volume.

8. An apparatus as claimed in claim 7 wherein the controller (24) includes control logic operative generate the frequency and the volume in proportion to the brake position signal, the vehicle distance signal and the vehicle speed signal.

9. A motor vehicle **characterised in that** the motor vehicle has a braking apparatus as claimed in any of claims 1 to 8.

10. A method for providing enhanced braking for a vehicle (11) comprising the steps of monitoring a position of a brake pedal (28), determining distance and relative speed to a second vehicle (22) and modifying a variable brake feel force of the brake pedal (28) in proportion to the position of the brake pedal (28), the distance and the relative speed to the second vehicle (22).
